# EUROPEAN PATENT SPECIFICATION

(11) **EP 1 914 155 B1**
(45) Date of publication and mention of the grant of the patent: **11.04.2012**
(21) Application number: 07253892.9
(22) Date of filing: 01.10.2007
(51) Int. Cl.: B62J 17/02, B62J 6/02, B62J 23/00

(54) **Front cowling assembly for a motorcycle**
Vordere Verkleidungsanordnung für ein Motorrad
Carénage antérieur pour motocyclette

(30) Priority: 18.10.2006 JP 2006284106; 15.01.2007 JP 2007005537
(43) Date of publication of application: 23.04.2008
(73) Proprietor: Yamaha Hatsudoki Kabushiki Kaisha, Iwata-shi, Shizuoka 438-8501 (JP)
(72) Inventor: Tanaka, Toru c/o Yamaha Hatsudoki Kabushiki Kaisha, Iwata-shi Shizuoka-ken 438-8501 (JP)
(74) Representative: Moreland, David

(56) References cited:
- EP-A- 1 172 289
- EP-A- 1 291 274
- EP-A- 1 491 434
- EP-A- 1 495 953
- EP-A- 1 495 954
- JP-A- 11 245 868
- US-A1- 2004 188 156

## Description

### FIELD OF THE INVENTION

The present invention relates to a front cowling assembly for a motorcycle.

### BACKGROUND TO THE INVENTION

The front side of a steering handle of known motorcycles may be covered by a cowling or fairing in order to improve external appearance and/or to improve wind shielding effect when running. This type of cowling generally includes a front wall that covers an outer periphery section of a head light, and left and right side walls that extend continuously to the rear from the front wall. Such an arrangement is disclosed in JP-A-2005-35526.

However, in the case of the above-described known cowling for a motorcycle, a design that is thought to be optimal for each type of motorcycle is used. Thus, it is generally the case that the structure of the cowling cannot be easily switched or substituted. Recently, there is demand in the commercial market for use of structures that allow switching of a cowling that has a design that matches the preferences of the user. However, the cowling is a component that is comparatively large and expensive. Thus, if the cowling is switched as is, considerable expense and a troublesome switching operation are required. As a result, switching of the cowling is not practical, and it has not been possible to satisfy a broad range of users' requirements.

The invention has been devised in light of the above-described known circumstances, and it is an object thereof to provide a front cowling assembly for a motorcycle that easily allows external appearance to be changed to satisfy a user's requirements.

Some other known cowl arrangements are described below.

EP1495954 describes a straddle type vehicle having a body cowl attached to a body frame via a plurality of stays. A molding is attached to the body cowl. The body cowl is formed with a head lamp mounting portion above a headlamp opening. The molding is formed with a pair of extension pieces. The extension pieces are formed with mounting pieces for fastening to panel inner molding mounting portions of the body cowl through nuts and bolts. Each extension piece is also formed with an engagement piece for engagement with an engagement hole of the body cowl.

JP11245868 describes a headlamp assembly wherein a windshield is installed above upper edges of a front cowling and a headlamp assembly, and the windshield is covered with a front cover.

EP1495953 describes a straddle type vehicle having a mount part formed at a flasher lamp and mounted to a body cowl. The mount part is covered by a garnish panel which is mounted at the body cowl and which comprises an engaging part that is engaged with an engaged part formed at the flasher lamp.

EP1291274 describes a motorcycle in which a headlamp is provided on a front surface of an upper cowl.

EP1172289 describes a scooter type vehicle comprising a molding having a downwardly extending extension formed at its lower central portion, which is located in the middle of a double headlight and adapted to cover the space between both headlights. The molding is also adapted to cover the region above the headlights.

US2004/0188156 describes a front cover for a straddle type vehicle in which the front cover encloses a headlight. The front cover is divided into a top central front portion, a left shroud for placement on the left side of the centre cover and a right shroud for placement on the right side of the centre cover. The left shroud and the right shroud are coupled via the headlight.

### SUMMARY OF THE INVENTION

Aspects of the present invention are defined by the independent claim 1. Some preferred features are described by the dependent claims.

Described herein is a motorcycle comprising:
a head light;
a cowling disposed so as to cover a periphery of the head light; and
a cover attached to the cowling and including a cover front edge section that is formed to surround at least a portion of an outer periphery edge section of the head light, and a cover rear section that is formed to extend to the rear from the cover front edge section, wherein the cover rear section is removably attached to the cowling.

The cover front edge section may be engaged with the cowling.

The cover front edge section of the cover may have an engagement hook on an outer periphery section, and the engagement hook may be engaged with an engagement hole formed in the cowling.

The cover rear section may be removably fixed to the cowling by a fixing member that is inserted from a rear side of the motorcycle. The fixing member may comprise a screw member.

The cover rear section may comprise an attachment boss that is formed to be positioned to an outer side of the head light when the motorcycle is viewed from a front-rear direction, and the attachment boss may be removably fixed to the cowling by the fixing member that is inserted from the rear of the motorcycle.

The cover front edge section may comprise a head light surrounding section that surrounds the head light, wherein a flange that curves in the motorcycle rear direction may be formed in the head light surrounding section, and
an opening hole through which the head light is visible may be formed in the cowling, and the flange may be inserted from the motorcycle front direction between the outer periphery edge section of the head light and an inner periphery edge section of the opening hole so as to be sandwiched between the inner periphery edge section of the opening hole and the outer periphery edge section of the head light.

An elastic member may be fitted to the flange, and the elastic member may be sandwiched between the outer periphery edge section of the head light and the inner periphery edge section of the opening hole of the cowling.

The head light and the cover may be respectively provided as a left and right pair that are positioned to the left and right in the motorcycle width direction, and the motorcycle may be provided with a steering handle that is disposed to the rear of the head lights and the cover and that includes left and right grips, wherein
the cover rear section covers the left and right grips of the steering handle from the front of the left and right grips.

The left and right head lights may form a generally elliptical shape that inclines diagonally upward and to the outer side in the motorcycle width direction when the motorcycle is viewed from the front, and the cover rear section may extend diagonally upward from the cover front edge section and toward the outer side of the motorcycle.

Also described herein is a front cowling assembly for a motorcycle, wherein said cowling is adapted to cover a periphery of a headlight, said cowling assembly comprising a cover including a cover front edge section that is formed to surround at least a portion of an outer periphery edge section of a head light, and a cover rear section that is formed to extend to the rear from the cover front edge section, wherein the cover rear section is removably attached to the cowling.

Described herein is a motorcycle including a body frame, a head light disposed on the body frame, and a cowling that is disposed so as to cover a periphery of the head light. The motorcycle is characterized by including a cover that is attached to the cowling. The cover includes a cover front edge section that is formed to surround at least a portion of an outer periphery edge section of the head light, and a cover rear section that is formed to extend to the rear from the cover front edge section. Further, the cover rear section is removably attached to the cowling.

In a motorcycle described herein, the cover is removably attached to the cowling. Thus, the cover can be switched for a service part that has, for example, a different color, design or shape, whereby it is easily possible to create an external appearance that has a great degree of variation, and to satisfy a broad range of users' requirements.

A cover described herein, as compared to the cowling, has a small size and can easily be attached and removed. Thus, it is possible to inhibit cost increase, and easily create an external appearance that gives a different impression to the watcher.

More specifically, the cover includes the cover front edge section that surrounds the periphery edge of the head light, and the cover rear section that extends from the cover front edge section to the rear. As a result, a key feature point of the external appearance is formed. Thus, the cover of the invention is a comparatively small component that can easily attract the attention of watchers. Accordingly, by switching the cover with a cover that has a different design, it is possible to easily give the watcher a different impression.

In addition, if the cover rear section is removably attached to the cowling, switching of the cover can be performed easily.

### BRIEF DESCRIPTION OF THE DRAWINGS

These and other aspects of the present invention will now be described, by way of example only, with reference to the accompanying drawings, in which:
Fig. 1 is a side view of a motorcycle including a cover of an embodiment of the invention;
Fig. 2 is a front view of the motorcycle shown in Fig. 1;
Fig. 3 is a front view of a cover section of the motorcycle;
Fig. 4 is a side view of the cover section of the motorcycle;
Fig. 5 is a back view of a head light section of the motorcycle;
Fig. 6 is a front view of a cowling section of the motorcycle;
Fig. 7 is a front view of the cover;
Fig. 8 is a cross sectional side view showing when the cover is attached;
Fig. 9 is a cross sectional view along a line IX-IX of FIG. 3;
Fig. 10 is a cross sectional view along a line X-X of FIG. 3;
Fig. 11 is a cross sectional view along a line XI-XI of FIG. 3;
Fig 12 is a cross sectional view along a line XII-XII of FIG. 3; and
Fig. 13 is a front view of a cover with service part specifications.

### DETAILED DESCRIPTION OF THE DRAWINGS

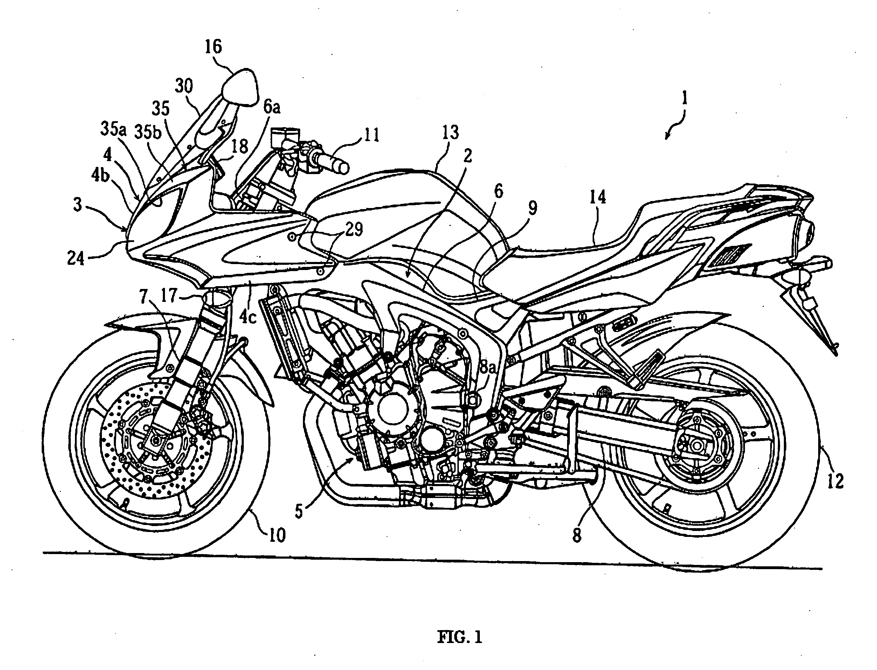

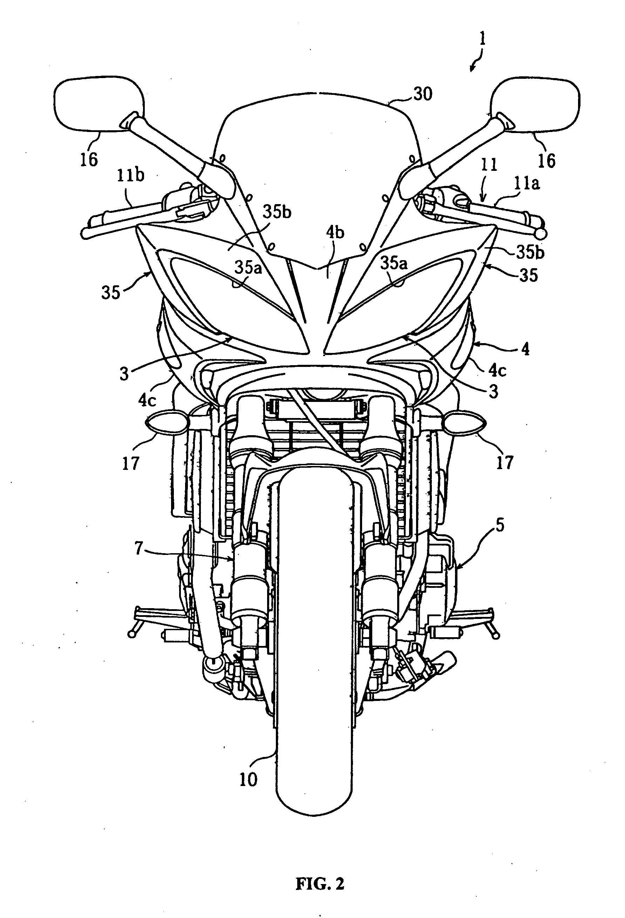

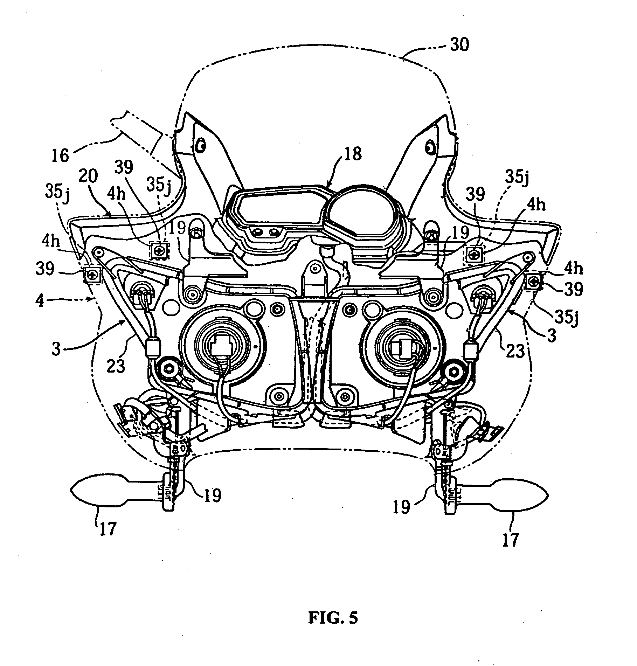

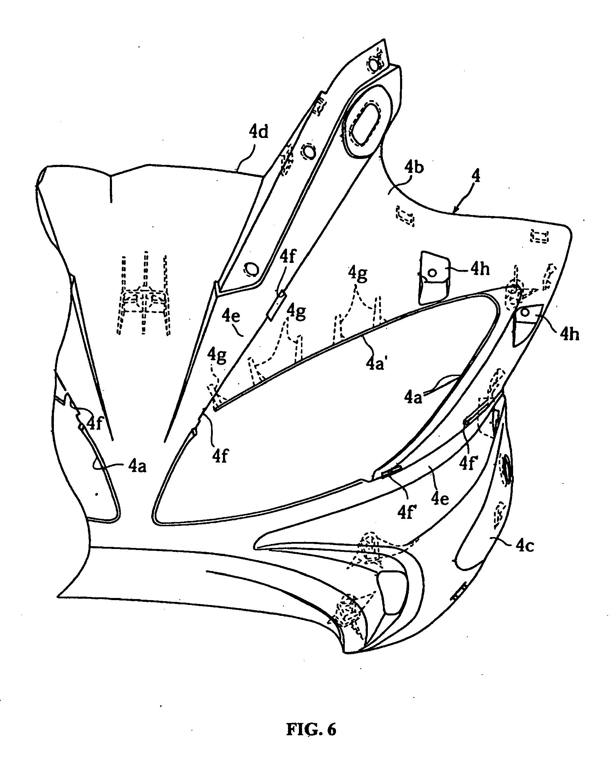

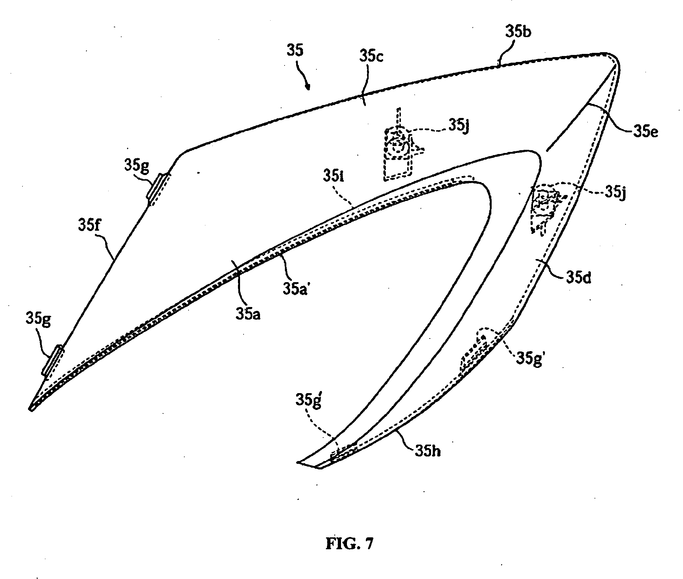

FIG. 1 to FIG. 12 illustrate a motorcycle. Note that, the terms front and rear, and left and right as used indicate the front and rear and the left and right directions when viewed from a rider seated on a seat.

Referring to the figures, a motorcycle 1 is provided with a body frame 2, left and right head lights 3, 3 that are disposed to the front of a steering handle of the body frame 2, and a cowling or fairing 4 that is disposed so as to cover the periphery of the left and right head lights 3.

The body frame 2 includes a main frame 6 that supports an engine 5 in a suspended manner, and a seat rail 9 that extends to the rear from a rear end upper section of the main frame 6.

A front fork 7 is disposed at a front end section of the main frame 6 via a head pipe 6a, and can be turned to the left-right. A rear arm 8 is disposed at a rear end lower section of the main frame 6 via a pivot shaft 8a, and can swing upward and downward.

A front wheel 10 is rotatably supported at a lower end section of the front fork 7, and a steering handle 11 is disposed at an upper end section of the front fork 7. A rear wheel 12 is rotatably supported at a rear end section of the rear arm 8.

A fuel tank 13 is disposed above the main frame 6, and a saddle-type seat 14 is disposed above the seat rail 9 to the rear side of the fuel tank 13.

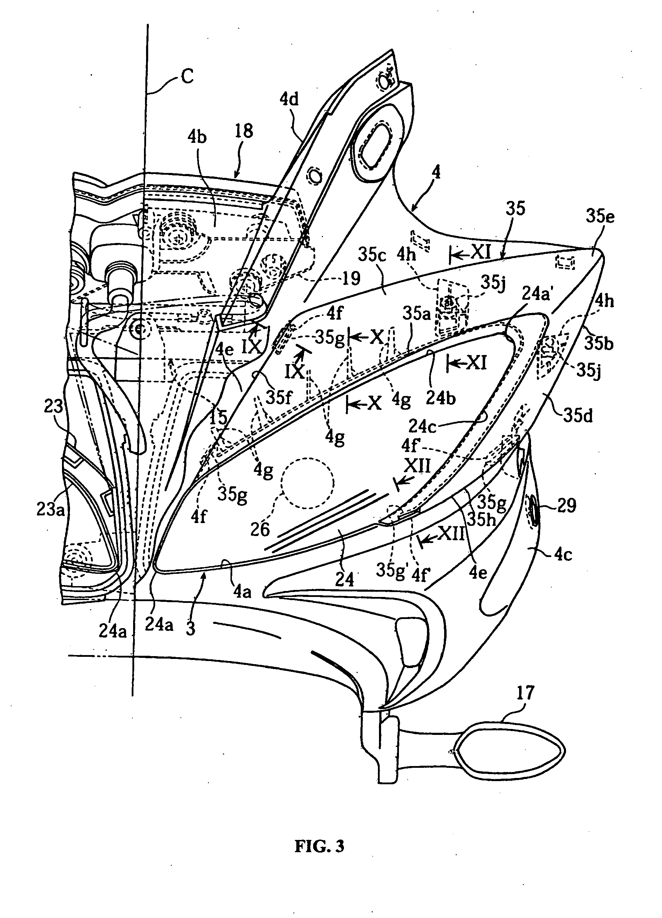

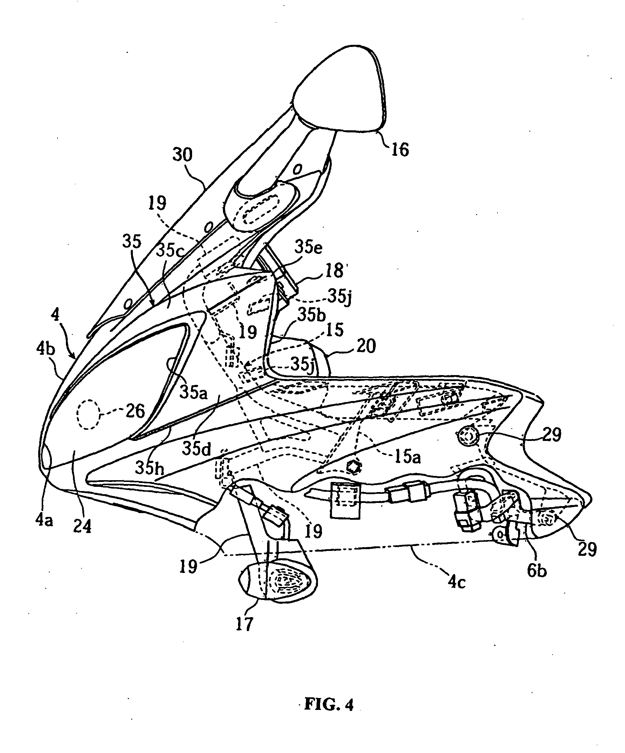

A front pipe 15 (see FIGs. 3 and 4) that extends in the motorcycle width direction is disposed to the front of the head pipe 6a of the main frame 6. Both end sections of the front pipe 15 are tightened and fixed by bolts to the main frame 6 via left and right U-shaped brackets 15a, 15a.

Various types of sheet metal stays 19 are attached to the front pipe 15. The sheet metal stays 19 support the left and right head lights 3, 3, the cowling 4, an inner panel 20, left and right side mirrors 16, 16, left and right flasher lights 17, 17, and a meter unit 18.

The meter unit 18 is disposed to the rear of the cowling 4, and upward from a central section between the left and right head lights 3, 3. The left and right flasher lights 17, 17 protrude downwards from a lower surface of the cowling 4. Furthermore, the left and right side mirrors 16, 16 are positioned so as to extend upwards from an upper end section of the cowling 4.

The inner panel 20 is disposed to cover above the head light 3 and an outer periphery section of the meter unit 18 at the rear side of the cowling 4. The inner panel 20 is removably attached to the cowling 4 and the stays 19.

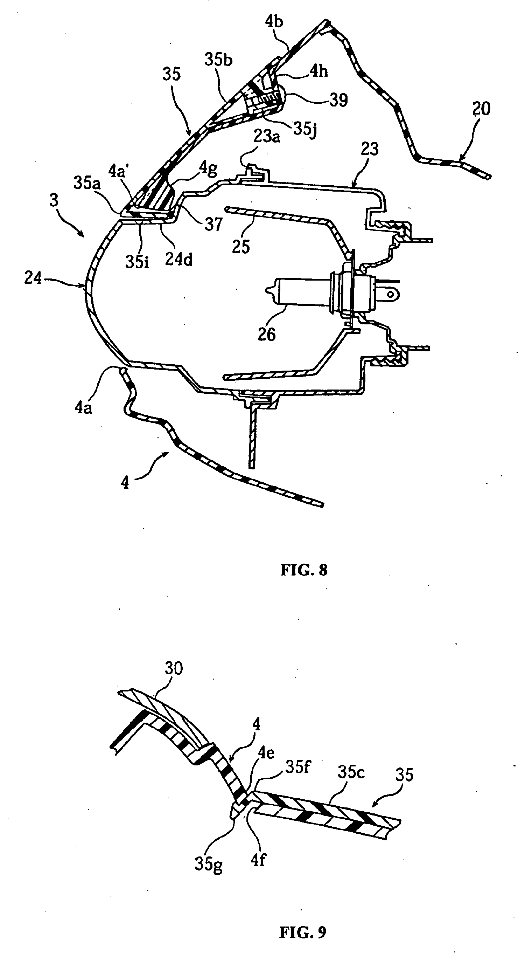

The left and right head lights 3 have left-right symmetry, and include, respectively, a housing 23, a lens 24, a reflector 25, and a lamp bulb 26 (refer to FIG. 8). The housing 23 is shaped as a bottomed cylinder when viewed in a cross section. The lens 24 has a bowl like shape when viewed in a cross section and is attached to a lens opening 23a of the housing 23. The reflector 25 also has a bowl like shape and is disposed inside the housing 23. The lamp bulb 26 is removably attached to a bottom section of the reflector 25.

The left and right lenses 24 have a generally elliptical shape when viewed from the front. A motorcycle width direction inner side edge 24a of the left and right lenses 24 is positioned in the vicinity of a motorcycle body center line C (FIG. 3), and a motorcycle width direction outer side edge 24a' is positioned diagonally upward to a motorcycle width direction outer side.

The cowling 4 includes a front wall 4b in which left and right cowling side light openings (opening holes) 4a, 4a are formed, and left and right side walls 4c, 4c that are continuous with and extend diagonally downwards and to the rear from lower edge sections of the light openings 4a. The left and right cowling side light openings 4a surround the outer periphery of the lenses 24.

The left and right side walls 4c, when viewed from the side of the motorcycle, pass along the side of the head pipe 6a and extend as far as a position that overlaps with a front edge section of the fuel tank 13. Two bolts 29, 29 fix the left and right side walls 4c along with the inner panel 20 in a removable manner to a bracket 6b that is fixed to the main frame 6.

A recessed notch 4d is formed in an upper section of the front wall 4b, and a wind shield 30 is removably attached to the recessed notch 4d so as to be tightened and fixed thereto.

A left and right pair of covers 35, 35 is removably attached to the cowling 4. Thus, these covers 35, 35 can be switched with service parts with a different design that are available in the commercial market. For the covers 35, it is possible to switch, for example, covers of various types, such as covers that have a different color or the same color as the cowling 4, or covers that have a shape that covers left and right grips 11a, 11b of the steering handle 11 from the front.

The left and right covers 35 have left and right symmetry, and include a cover front edge section 35a, and a cover rear section 35b. The cover front edge section 35a surrounds an outer periphery edge section of the lenses 24 of the head light 3, and forms a generally continuous surface with the edge section. The cover rear section 35b extends integrally to the rear from the cover front edge section 35a and is attached to the cowling 4 in a removable manner. The more specific structure will be described next.

The cover front edge section 35a of the cover 35 is formed to surround the full length section of an upper edge 24b of the lens 24 of the head light 3 as far as a rear section of a rear edge section 24c. The cover rear section 35b, when viewed from the front of the motorcycle, extends to the rear while spreading outwards to the outer side in the motorcycle width direction from the cover front edge section 35a. More specifically, the cover rear section 35b has a strip like shape including an upper edge member 35c and a side edge member 35d. The upper edge member 35c extends diagonally upward to the rear from a motorcycle width direction inner side edge section 35f toward the motorcycle width direction outer side. The side edge member 35d extends downward and slightly to the inside in a curved manner from an outer edge of the upper edge member 35c. An inner periphery edge section of the upper edge member 35c and the side edge member 35d forms a molding side light opening (head light surrounding section) 35a' that surrounds an upper edge and a lower edge rear section of the lens 24 of the head light 3. In addition, a boundary section 35e of the upper edge member 35c and the side edge member 35d protrudes to the rear and to the front.

A front and rear pair of inner side hooks 35g, 35g and lower side hooks 35g', 35g' are formed respectively in the inner side edge section 35f of the upper edge member 35c and a lower side edge section 35h of the side edge member 35d.

In addition, inner side engagement holes 4f, 4f, and lower side engagement holes 4f', 4f' that detachably engage with the hooks 35g, 35g' are formed in mating surfaces 4e, 4e of the cowling 4 that mate with the inner side edge section 35f and the lower side edge section 35h of the cover 35. As a result, the cowling 4, the mating surfaces 4e, 4e, and inner side edge section 35f and the lower side edge section 35h of the covers 35 form a generally continuous surface.

A flange 35i that bends toward the rear is formed in an upper edge section of the molding side light openings 35a' of the covers 35. A rubber trim (elastic member) 37 is fitted to the flange 35i.

In addition, a plurality of vertical ribs 4g are formed at distances apart in the motorcycle width direction in a rear surface of an upper edge section (inner periphery edge section) 4a' of the cowling side lens opening 4a of the cowling 4. Moreover, a stepped section (outer periphery edge section) 24d is formed in an upper edge section of the lens 24 of the head light 3. Lower faces of the vertical ribs 4g face the stepped section 24d with a distance of separation there between.

Moreover, the flange 35i is inserted, from the motorcycle front side, between the upper edge section 4a' of the cowling 4 and the stepped section 24d of the lens 24, and is sandwiched between each vertical rib 4g and the stepped section 24d with the rubber trim 37 interposed there between.

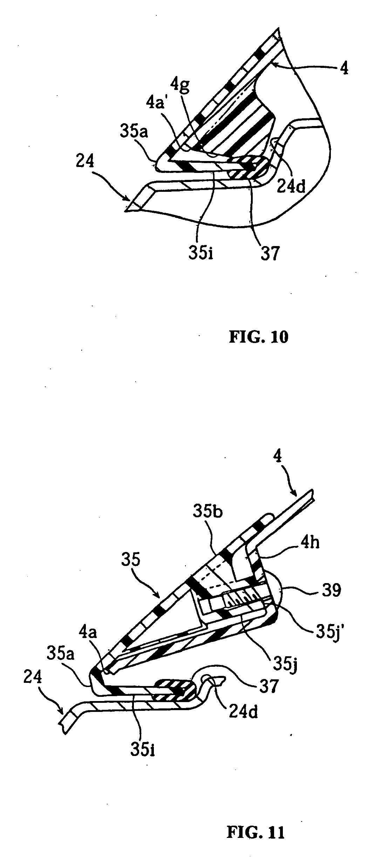

Respective bosses 35j , 35j are formed in the upper edge member 35c, and the side edge member 35d of the cover 35. Each boss 35j is positioned such that an attachment surface 35j' thereof extends diagonally upward to the rear (refer to FIG. 11).

Furthermore, each boss 35j is located at a position away from each hook 35g of the upper edge member 35c and the side edge member 35d, and at a position near to the boundary section 35e. In addition, each boss 35j, when viewed from the rear side of the motorcycle, is located at a position to the outer side of the periphery edge of the head light 3, namely, is located at a position where, when attachment bolts are screwed in, the head light 3 will not cause a hindrance.

Furthermore, attachment seats 4h, 4h are formed with a step like shape at a section of the front wall 4b and the side walls 4c of the cowling 4 that corresponds with the bosses 35j. The attachment seats 4h abut against the attachment surface 35j' of the bosses 35j.

In addition, each boss 35j is tightened and fixed in a removable manner to the attachment seats 4h of the cowling 4 by tapping screws (fixing members) 39, 39 that are inserted from the motorcycle rear side.

When each cover 35 is attached, in the state that the inner panel 20 is removed, the flange 35i is inserted, from the motorcycle front side, between the vertical ribs 4g and the stepped section 24d so as to be sandwiched there between. At the same time, each hook 35g, 35g' is engaged with each engagement hole 4f, 4f'. In this state, the tapping screw 39 is used to fix the boss 35j to the attachment seat 4h of the cowling 4 from the motorcycle rear side. Moreover, when the cover 35 is removed, the tapping screw 39 is loosened and removed, each hook 35g is disengaged from each engagement hole 4f, and the cover 35 is pulled away to the front.

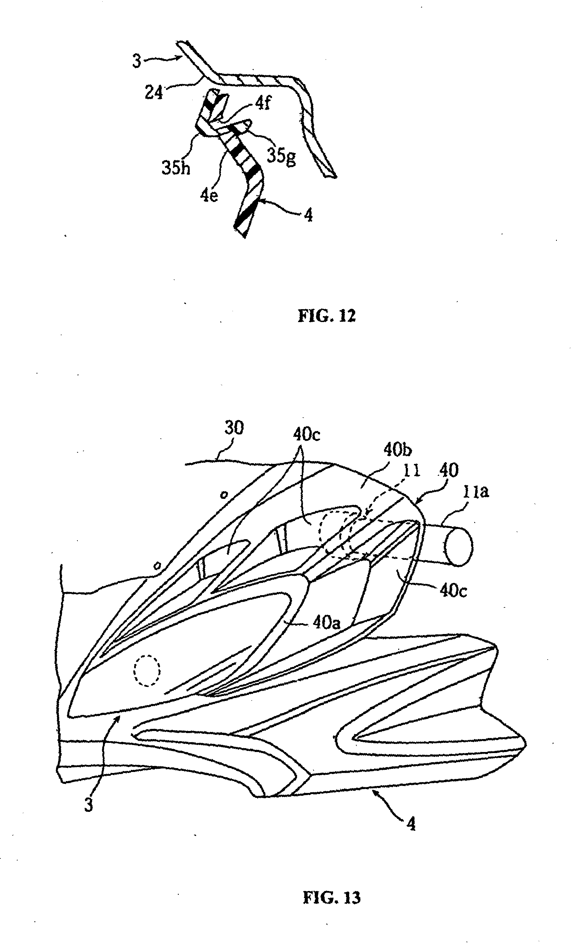

Note that, FIG. 13 shows a cover 40 with service part specifications that has a different color or shape to the cover 35 described above. The cover 40 has a structure including a cover front edge section 40a and a cover rear section 40b that extends to the rear from the cover front edge section 40a. A plurality of recesses 40c that have a square shape are formed in the cover rear section 40b. As a result of adopting this structure, a strong and bold design is provided. In this manner, in this embodiment, it is possible to switch the covers with covers that have a color, design, or shape that satisfy the user's requirements.

In this embodiment, the cover 35 is attached to the cowling 4 in a removable manner. Accordingly, the cover 35 can be switched for the cover 40 available on the commercial market as a service part that has, for example, a different color, design or shape. Moreover, it is easily possible to create an external appearance that has a greater degree of variation, and to satisfy a broader range of users' requirements.

The cover 35 of the embodiment, as compared to the above-described cowling 4, has a small size and can easily be attached and removed. Thus, it is possible to inhibit cost increase, and easily create an external appearance that gives a different impression to the watcher.

More specifically, the cover 35 of the embodiment includes the cover front edge section 35a that surrounds the periphery edge of the head light 3, and the cover rear section 35b that extends from the cover front edge section 35a to the rear. As a result, a key feature point of the external appearance is formed. Thus, the cover 35 of the embodiment is a comparatively small component that can easily attract the attention of watchers. Accordingly, by switching the cover 35 with the cover 40 that has the different design, it is possible to easily provide a different visual impression.

Moreover, in this embodiment, the hooks 35g, 35g' of the inner side edge section 35f and the lower side edge section 35h of the cover 35 are engaged with the engagement holes 4f, 4f' of the mating surfaces 4e of the cowling 4. Further, the bosses 35j of the cover rear section 35b are screw fixed to the attachment seats 4h of the cowling 4 by the tapping screws 39 that are inserted from the motorcycle rear side. Thus, the cover 35 is removably attached to the cowling 4. The cover 35 can be switched by performing a simple operation, namely, removing the two tapping screws 39 and disengaging the engagement of the hooks. Note that, the tapping screws 39 are covered by the inner panel 20, and are thus not visible from the outside. Accordingly, external appearance is not impaired, and malicious tampering can be inhibited.

In addition, in this embodiment, the flange 35i is formed in the cover front edge section 35a of the cover 35 and curves toward the rear. The flange 35i, when viewed from the front of the motorcycle, is inserted and sandwiched between the vertical ribs 4g of the cowling 4 and the stepped section 24d of the lenses 24. Thus, support strength of the cover 35 can be ensured using a simple structure and without additional components. Further, alignment accuracy of the cover 35 and the lenses 24 can be improved.

In addition, the rubber trim 37 is fitted to the flange 35i, and the flange 35i is sandwiched between the vertical ribs 4g and the stepped section 24d with the rubber trim 37 interposed there between. Thus, rattling of cover 35 can be inhibited.

According to this embodiment, the cover can be simply switched, and thus, for example, the cover can be easily switched with, a cover like the cover 40 shown in FIG. 13, in which the cover rear section 40b extends diagonally upwards to the outer side in the motorcycle width direction from the cover front edge section 40a so as to cover the grip sections at the front side of the left and right grips 11a, 11b of the steering handle 11. If such a switch is performed, it is possible to improve the wind shielding effect when running using the cover 40 on the left and right sides, external appearance can be improved, and rider tiredness induced by running wind can be reduced.

Note that, in the above-described embodiment, an example is explained of a motorcycle having dual head lights. However, the invention may be applied to a motorcycle that has one head light in a center section in the motorcycle width direction. In this case, left and right covers may be disposed to extend to the rear from left and right side edge sections of the head light. In the case that this structure is adopted, an external appearance that includes a greater degree of variation can be easily created, and a broad range of users' requirements can be satisfied.

### Description of the Reference Numerals and Signs

1 Motorcycle
2 Body Frame
3 Head Light
4 Cowling
4a Cowling Side Light Opening (Opening Hole)
4a' Upper Edge Section (Inner Periphery Edge Section)
4f, 4f' Engagement Holes
11 Steering Handle
11a, 11b Left And Right Grips
24d Stepped Section (Outer Periphery Edge Section)
35, 40 Cover
35a Cover Front Edge Section
35a' Molding Side Light Opening (Head Light Surrounding Section)
35b, 40b Cover Rear Section
35g, 35g' Engagement Hooks
35j Attachment Boss
35i Flange
37 Rubber Trim (Elastic Member)
39 Tapping Screws (Fixing Member, Screw Member)

## Claims

1. A front cowling assembly for a motorcycle (1) , wherein said cowling assembly is adapted to cover a periphery of a headlight (3) and said cowling assembly being mountable to the motorcycle (1) such that a front of the cowling assembly is arranged toward a front of the motorcycle (1) and a rear of the cowling assembly is arranged toward a rear of the motorcycle (1), said cowling assembly comprising
a cowling (4) adapted to cover the periphery of the headlight, the cowling (4) being formed with an opening hole (4a) through which the head light (3) is visible, **characterized in that** said cowling assembly comprises
a left and right pair of covers (35) formed separately from each other, each cover (35) including a cover front edge section (35a) that is formed to surround at least a portion of an outer periphery edge section (24d) of the head light (3), and a cover rear section (35b) that is adapted to extend to the rear of the motorcycle from the cover front edge section (35a), wherein
the cover front edge section (35a) of each cover (35) comprises a head light surrounding section (35a') arranged to surround the head light (3), a flange (35i) that curves in a rearward direction of the motorcycle is formed in the head light surrounding section (35a') of each cover, and each flange (35i) is adapted to be inserted from the front direction of the motorcycle between the outer periphery edge section (24d) of the head light (3) and an inner periphery edge section (4a') of the opening hole (4a) so as to be sandwiched between the inner periphery edge section (4a') of the opening hole (4a) and the outer periphery edge section (24d) of the head light (3), wherein
the cover rear section (35b) of each cover (35) is removably attached to the cowling (4) , and wherein an elastic member (37) is fitted to each flange (35i) , and each elastic member (37) is arranged to be sandwiched between the outer periphery edge section (24d) of the head light (3) and the inner periphery edge section (4a') of the opening hole (4a) of the cowling (4).

2. The front cowling assembly according to claim 1, wherein the cover front edge section (35a) of each cover (35) is engaged with the cowling (4).

3. The front cowling assembly according to claim 1 or 2, wherein the cover front edge section (35a) of each cover (35) has an engagement hook (35g, 35g') on an outer periphery section, and each engagement hook (35g, 35g') is engaged with an engagement hole (4f, 4f') formed in the cowling (4).

4. The front cowling assembly according to any preceding claim, wherein the cover rear section (35b) of each cover is removably fixed to the cowling (4) by a respective fixing member (39) that is adapted to be inserted from a rear side of the motorcycle (1).

5. The front cowling assembly according to claim 4, wherein each fixing member (39) comprises a screw member.

6. The front cowling assembly according to claim 4 or 5, wherein the cover rear section (35b) of each cover (35) comprises an attachment boss (35j) that is adapted to be positioned to an outer side of the head light (3) when viewed from a front-rear direction of the motorcycle, and each attachment boss (35j) is removably fixed to the cowling (4) by the respective fixing member (39) that is adapted to be inserted from the rear of the motorcycle (1).

7. The front cowling assembly according to any preceding claim, wherein the cowling assembly is adapted to cover a periphery of a left and right pair of head lights (3), the pair of headlights (3) and the pair of covers (40) being provided as a left and right pair that are adapted to be positioned to the left and right in a motorcycle width direction, wherein the cover rear section (40b) of each cover (40) is adapted to cover left and right grips (11a, 11b) of a steering handle (11) from the front of the left and right grips (11a, 11b), wherein the front cowling assembly is adapted to be mounted to the motorcycle having a steering handle (11) disposed to the rear of the headlights (3) such that, when the front cowling assembly is mounted to the motorcycle, the steering handle (11) of the motorcycle is disposed to the rear of the covers (40).

8. A motorcycle (1) comprising:
a head light (3); and
a front cowling assembly according to any preceding claim.

9. The motorcycle (1) according to claim 8 when dependent on claim 7, wherein the head light (3) is provided as a left and right pair that are positioned to the left and right in the motorcycle width direction, the left and right head lights (3) form a generally elliptical shape that inclines diagonally upward and outwardly in the motorcycle width direction when the motorcycle (1) is viewed from the front, and the cover rear sections (35b) of each cover (35) extend diagonally upward from the respective cover front edge section and toward the outer side of the motorcycle (1).

## Patentansprüche

1. Vordere Verkleidungsbaugruppe für ein Motorrad (1), wobei die Verkleidungsbaugruppe dafür eingerichtet ist, einen Rand eines Frontscheinwerfers (3) abzudecken, und die Verkleidungsbaugruppe derart an dem Motorrad (1) angebracht werden kann, dass ein vorderer Teil der Verkleidungsbaugruppe zu einem vorderen Teil des Motorrades (1) hin angeordnet ist und ein hinterer Teil der Verkleidungsbaugruppe zu einem hinteren Teil des Motorrades (1) hin angeordnet ist, wobei die Verkleidungsbaugruppe Folgendes umfasst:
eine Verkleidung (4), die dafür eingerichtet ist, den Rand des Frontscheinwerfers abzudecken, wobei die Verkleidung (4) mit einem Öffnungsloch (4a), durch das der Frontscheinwerfer (3) sichtbar ist, geformt ist, **dadurch gekennzeichnet, dass** die Verkleidungsbaugruppe Folgendes umfasst:
ein Paar aus einer linken und einer rechten Abdeckung (35), die gesondert voneinander geformt sind, wobei jede Abdeckung (35) eine Abdeckungsvorderkantensektion (35a), die dafür geformt ist, wenigstens einen Abschnitt einer Außenrand-Kantensektion (24d) des Frontscheinwerfers (3) zu umschließen, und eine Abdeckungshecksektion (35b), die dafür eingerichtet ist, sich von der Abdeckungsvorderkantensektion (35a) bis zu dem hinteren Teil des Motorrades zu erstrecken, einschließt, wobei
die Abdeckungsvorderkantensektion (35a) jeder Abdeckung (35) eine Frontscheinwerfer-Umschließungssektion (35a') umfasst, die dafür angeordnet ist, den Frontscheinwerfer (3) zu umschließen, ein Flansch (35i), der sich in einer Rückwärtsrichtung des Motorrades krümmt, in der Frontscheinwerfer-Umschließungssektion (35a') jeder Abdeckung geformt ist und jeder Flansch (35i) dafür eingerichtet ist, von der Vorwärtsrichtung des Motorrades aus zwischen der Außenrand-Kantensektion (24d) des Frontscheinwerfers (3) und einer Innenrand-Kantensektion (4a') des Öffnungslochs (4a) so eingesetzt zu werden, dass er zwischen der Innenrand-Kantensektion (4a') des Öffnungslochs (4a) und der Außenrand-Kantensektion (24d) des Frontscheinwerfers (3) eingelegt wird, wobei
die Abdeckungshecksektion (35b) jeder Abdeckung (35) abnehmbar an der Verkleidung (4) befestigt ist und wobei ein elastisches Element (37) an jedem Flansch (35i) befestigt ist und jedes elastische Element (37) dafür angeordnet ist, zwischen der Innenrand-Kantensektion (4a') des Öffnungslochs (4a) und der Außenrand-Kantensektion (24d) des Frontscheinwerfers (3) eingelegt zu werden.

2. Vordere Verkleidungsbaugruppe nach Anspruch 1, wobei die Abdeckungsvorderkantensektion (35a) jeder Abdeckung (35) mit der Verkleidung (4) in Eingriff gebracht ist.

3. Vordere Verkleidungsbaugruppe nach Anspruch 1 oder 2, wobei die Abdeckungsvorderkantensektion (35a) jeder Abdeckung (35) einen Eingriffshaken (35g, 35g') an einer Außenrandsektion hat und jeder Eingriffshaken (35g, 35g') in Eingriff mit einem in der Verkleidung (4) geformten Eingriffsloch (4f, 4f') gebracht ist.

4. Vordere Verkleidungsbaugruppe nach einem der vorhergehenden Ansprüche, wobei die Abdeckungshecksektion (35b) jeder Abdeckung durch ein jeweiliges Befestigungselement (39), das dafür eingerichtet ist, von einer Rückseite des Motorrades (1) aus eingesetzt zu werden, abnehmbar an der Verkleidung (4) befestigt ist.

5. Vordere Verkleidungsbaugruppe nach Anspruch 4, wobei jedes Befestigungselement (39) ein Schraubenelement umfasst.

6. Vordere Verkleidungsbaugruppe nach Anspruch 4 oder 5, wobei die Abdeckungshecksektion (35b) jeder Abdeckung (35) einen Befestigungsvorsprung (35j) umfasst, der dafür eingerichtet ist, an einer Außenseite des Frontscheinwerfers (3), gesehen aus einer Front-Heck-Richtung des Motorrades, angeordnet zu werden, und jeder Befestigungsvorsprung (35j) durch das jeweilige Befestigungselement (39), das dafür eingerichtet ist, von der Rückseite des Motorrades (1) aus eingesetzt zu werden, abnehmbar an der Verkleidung (4) befestigt ist.

7. Vordere Verkleidungsbaugruppe nach einem der vorhergehenden Ansprüche, wobei die Verkleidungsbaugruppe dafür eingerichtet ist, einen Rand eines Paares aus einem linken und einem rechten Frontscheinwerfer (3) abzudecken, wobei das Paar von Frontscheinwerfern (3) und das Paar von Abdeckungen (40) als ein Paar aus links und rechts bereitgestellt werden, das dafür eingerichtet ist, links und rechts in einer Motorradbreitenrichtung angeordnet zu werden, wobei die Abdeckungshecksektion (40b) jeder Abdeckung (40) dafür eingerichtet ist, einen linken und einen rechten Griff (11a, 11b) eines Lenkerbügels (11) von der Vorderseite des linken und des rechten Griffs(11a, 11b) aus abzudecken, wobei die vordere Verkleidungsbaugruppe dafür eingerichtet ist, derart an dem Motorrad, das einen Lenkerbügel (11) hat, der hinter den Frontscheinwerfern (3) angeordnet ist, angebracht zu werden, dass, wenn die vordere Verkleidungsbaugruppe an dem Motorrad angebracht ist, der Lenkerbügel (11) des Motorrades hinter den Abdeckungen (40) angeordnet ist.

8. Motorrad (1), das Folgendes umfasst:
einen Frontscheinwerfer (3) und
eine vordere Verkleidungsbaugruppe nach einem der vorhergehenden Ansprüche.

9. Motorrad (1) nach Anspruch 8, soweit abhängig von Anspruch 7, wobei der Frontscheinwerfer (3) als ein Paar aus links und rechts bereitgestellt wird, das links und rechts in der Motorradbreitenrichtung angeordnet ist, wobei der linke und der rechte Frontscheinwerfer (3) eine im Allgemeinen elliptische Form bilden, die sich in Diagonalrichtung in der Motorradbreitenrichtung nach oben und nach außen neigt, wenn das Motorrad (1) von der Vorderseite gesehen wird, und sich die Abdeckungshecksektionen (35b) jeder Abdeckung (35) in Diagonalrichtung von der jeweiligen Abdeckungsvorderkantensektion aus nach oben und zu der Außenseite des Motorrades (1) hin erstrecken.

## Revendications

1. Assemblage de carénage avant pour une motocyclette (1), ledit assemblage de carénage étant adapté pour recouvrir une périphérie d'un phare (3) et ledit assemblage de carénage pouvant être monté sur la motocyclette (1) de sorte qu'une partie avant de l'assemblage de carénage est agencée vers une partie avant de la motocyclette (1), une partie arrière de l'assemblage de carénage étant agencée vers une partie arrière de la motocyclette (1), ledit assemblage de carénage comprenant :
un carénage (4), adapté pour recouvrir la périphérie du phare, le carénage (4) comportant un trou d'ouverture (4a) à travers lequel le phare (3) est visible, **caractérisé en ce que** ledit assemblage de carénage comprend :
une paire de couvercles de gauche et de droite (35), formés séparément l'un de l'autre, chaque couvercle (35) englobant une section de bord avant du couvercle (35a), formée de sorte à entourer au moins une partie d'une section de bord périphérique externe (24b) du phare (3), et une section arrière du couvercle (35b), adaptée pour s'étendre vers l'arrière de la motocyclette à partir de la section de bord avant du couvercle (35a) ; dans lequel
la section de bord avant du couvercle (35a) de chaque couvercle (35) comprend une section entourant le phare (35a'), destinée à entourer le phare (3), une bride (35i) courbée dans une direction allant vers l'arrière de la motocyclette étant formée dans la section entourant le phare (35a') de chaque couvercle, et chaque bride (35i) étant adaptée pour être insérée à partir de la direction avant de la motocyclette entre la section de bord périphérique externe (24d) du phare (3) et une section de bord périphérique interne (4a') du trou d'ouverture (4a), de sorte à être agencée en sandwich entre la section de bord périphérique interne (4a') du trou d'ouverture (4a) et la section de bord périphérique externe (24d) du phare (3) ; dans lequel
la section arrière du couvercle (35b) de chaque couvercle (35) est fixée de manière amovible sur le carénage (4), un élément élastique (37) étant fixé sur chaque bride (35i), chaque élément élastique (37) étant destiné à être agencé en sandwich entre la section de bord périphérique externe (24d) du phare (3) et la section de bord périphérique interne (4a') du trou d'ouverture (4a) du carénage (4).

2. Assemblage de carénage avant selon la revendication 1, dans lequel la section de bord avant du couvercle (35a) de chaque couvercle (35) est engagée dans le carénage (4).

3. Assemblage de carénage avant selon les revendications 1 ou 2, dans lequel la section de bord avant du couvercle (35a) de chaque couvercle (35) comporte un crochet d'engagement (35g, 35g') sur une section périphérique externe, chaque crochet d'engagement (35g, 35g') étant engagé dans un trou d'engagement (4f, 4f') formé dans le carénage (4).

4. Assemblage de carénage avant selon l'une quelconque des revendications précédentes, dans lequel la section arrière du couvercle (35b) de chaque couvercle est fixée de manière amovible sur le carénage (4) par un élément de fixation respectif (39), adapté pour être inséré à partir d'un côté arrière de la motocyclette (1).

5. Assemblage de carénage avant selon la revendication 4, dans lequel chaque élément de fixation (39) comprend un élément de vis.

6. Assemblage de carénage avant selon les revendications 4 ou 5, dans lequel la section arrière du couvercle (35b) de chaque couvercle (35) comprend un bossage de fixation (35j), adapté pour être positionné sur un côté externe du phare (3), vu à partir d'une direction allant de l'avant vers l'arrière de la motocyclette, chaque bossage de fixation (35j) étant fixé de manière amovible sur le carénage (4) par l'élément de fixation respectif (39) adapté pour être inséré à partir de l'arrière de la motocyclette (1).

7. Assemblage de carénage avant selon l'une quelconque des revendications précédentes, dans lequel l'assemblage de carénage est adapté pour recouvrir une périphérie d'une paire de phares de gauche et de droite (3), la paire de phares (3) et la paire de couvercles (40) étant agencées sous forme d'une paire de gauche et d'une paire de droite, adaptées pour être positionnées vers la gauche et vers la droite dans une direction de la largeur de la motocyclette, la section arrière du couvercle (40b) de chaque couvercle (40) étant adaptée pour recouvrir des poignées de gauche et de droite (11a, 11b) d'un guidon (11), à partir de l'avant des poignées de gauche et de droite (11a, 11b), l'assemblage de carénage avant étant adapté pour être monté sur la motocyclette comportant un guidon (11) agencé vers l'arrière des phares (3), de sorte que lors du montage de l'assemblage de carénage avant sur la motocyclette, le guidon (11) de la motocyclette est agencé à l'arrière des couvercles (40).

8. Motocyclette (1), comprenant :
un phare (3) ; et
un assemblage de carénage avant selon l'une quelconque des revendications précédentes.

9. Motocyclette (1) selon la revendication 8, dépendant de la revendication 7, dans laquelle les phares (3) sont agencés sous forme d'une paire de gauche et de droite, positionnée vers la gauche et vers le droite dans la direction de la largeur de la motocyclette, les phares de gauche et de droite (3) établissant une forme généralement elliptique inclinée diagonalement vers le haut et vers l'extérieur dans la direction de la largeur de la motocyclette, la motocyclette (1) étant vue de l'avant, les sections arrière du couvercle (35b) de chaque couvercle (35) s'étendant diagonalement vers le haut à partir de la section de bord avant respective du couvercle et vers le côté externe de la motocyclette (1).
